# EUROPEAN PATENT APPLICATION

(11) **EP 4 840 421 A2**
(43) Date of publication of application: **18.11.2026**
(21) Application number: 26209030.1
(22) Date of filing: 10.05.2023
(51) Int. Cl.: A61C 7/00

(54) **MANDIBULAR EXPANSION APPLIANCE DEVICE**

(30) Priority: 10.05.2022 US 202263340440 P
(62) Document number(s) of the earlier application(s) in accordance with Art. 76 EPC: 23729631.4 / 4 522 070
(71) Applicant: Align Technology, Inc., San Jose, CA 95134 (US)
(72) Inventor: QIN, Shipin, San Jose, CA 95134 (US); WANG, Yuxiang, San Jose, CA 95134 (US); YU, Zhou, San Jose, CA 95134 (US); NISHIMUTA, James, San Jose, CA 95134 (US); SATO, Jun, San Jose, CA 95134 (US); LIU, Siyi, San Jose, CA 95134 (US)
(74) Representative: Hancox, Jonathan Christopher

(57) **Abstract**

A mandibular expansion appliance device comprises a shell body having a lingual side, an occlusal side, and a buccal side. The shell body comprises an anterior tooth-receiving region, a first posterior tooth receiving region, a second posterior tooth-receiving region, and a first intermediate region between the anterior region and the first posterior tooth receiving region. The first intermediate region is missing the occlusal and buccal sides of the shell body but includes the lingual side. The lingual side of the first intermediate region is thicker than the lingual side of the anterior tooth-receiving region.

## Description

### CLAIM OF PRIORITY

This patent application claims priority to U.S. provisional patent application no. 63/340,440, titled "OCCLUSAL FEATURES FOR MANDIBULAR ARCH EXPANSION," filed on May 10, 2022, and herein incorporated by reference in its entirety.

### INCORPORATION BY REFERENCE

All publications and patent applications mentioned in this specification are herein incorporated by reference in their entirety to the same extent as if each individual publication or patent application was specifically and individually indicated to be incorporated by reference.

### BACKGROUND

For adolescents whose eruption teeth are still growing, conventional thermoformed retainers may not be advisable because such devices may not leave room for the eruption teeth. Cutouts on eruption teeth can be added to the conventional retainer shape to address this issue; a typical design with such cutouts is the maxillary Theroux retainer, which features a trans-palatal design that covers the palatal region to ensure a high stiffness of the device. However, due to the tongue, such a design may not be useful for the lower jaw, which, in turn, results in insufficient forces to retain the mandibular teeth, especially for arch expansion.

What is needed are apparatuses (e.g., devices, systems, etc.) and methods for applying an expansion force to the mandibular teeth.

### SUMMARY OF THE DISCLOSURE

Described herein are dental apparatuses (e.g., devices and systems) and methods of making and using them, including methods of forming and/or executing dental treatment plans including these apparatuses. The apparatuses and methods may be configured for expanding and/or retaining an expansion, of a mandibular arch and/or maxillary arch. In some examples, these apparatuses may include retainers for use as a final step (or steps) of a treatment plan. In particular, these apparatuses may include a mandibular dental appliance (e.g., retainer) for retaining expansion of the mandibular dental arch.

The apparatuses and methods described herein may incorporate occlusal features for a mandibular retainer that may retain the mandibular teeth better than existing apparatuses. The mandibular retainers described herein may utilize the extra stiffness from the maxillary retainer to provide the necessary forces to retain the mandibular teeth.

The apparatuses described herein may include features on the occlusal plane, e.g., of either of both the upper/maxillary and lower/mandibular devices, so that the extra stiffness of the upper/maxillary device (e.g., similar to Theroux retainer) may provide enhanced retention force for mandibular teeth. In general, although Theroux-style retainers for the lower jaw have been proposed, these devices are not effective, as they cannot provide sufficient force, and are therefore less efficient, likely due to insufficient stiffness after incorporating room for the tongue and cutouts to allow for extrusion of teeth. The apparatuses and methods described herein include features that make it possible for such a device to apply the requisite expansion force (e.g., in some examples, forces of about 1 N or greater).

In general, the apparatuses and methods described herein may be configured to apply an expansion force on the lower (mandibular) dental arch, e.g., to expand or assist in retaining expansion of the lower dental arch. For example, a mandibular dental appliance device may include: a shell body having a lingual side, an occlusal side, and a buccal side, wherein the shell body comprises an anterior tooth-receiving region, a first posterior tooth-receiving region, and a second posterior tooth-receiving region; a first opening through the occlusal side of the shell body between the anterior tooth-receiving region and the first posterior tooth-receiving region, configured to permit eruption of one or more teeth therethrough; and a thickened rim extending around the first opening through the occlusal side of the shell body, wherein the thickened rim has a thickness that is greater than twice as thick as a thickness of the first posterior tooth-receiving region. Any of these devices may include a second opening through the occlusal side of the shell body between the anterior tooth-receiving region and the second posterior tooth-receiving region, configured to permit eruption of one or more teeth therethrough, and a second thickened rim extending around the second opening through the occlusal side of the shell body, wherein the thickened rim has a thickness that is greater than twice as thick as a thickness of the second posterior tooth-receiving region.

For example, described herein are mandibular dental appliance device, the device comprising: a shell body having a lingual side, an occlusal side, and a buccal side, wherein the shell body comprises an anterior tooth-receiving region, a first posterior tooth-receiving region, and a second posterior tooth-receiving region; a first opening through the occlusal side of the shell body between the anterior tooth-receiving region and the first posterior tooth-receiving region, configured to permit eruption of one or more teeth therethrough; a second opening through the occlusal side of the shell body between the anterior tooth-receiving region and the second posterior tooth-receiving region, configured to permit eruption of one or more teeth therethrough; and a first thickened rim extending around the first opening through the occlusal side of the shell body and a second thickened rim extending around the second opening through the occlusal side of the shell body, wherein the first and second thickened rims each have a thickness that is greater than twice as thick as a thickness of the first posterior tooth-receiving region or the second posterior tooth-receiving region.

In any of these apparatuses the rim extending around the openings through the occlusal side of the shell body may extend lower than the occlusal surface (e.g., at least partially down the lingual and/or buccal sides of shell body. Thus, the rim extending around the openings through the occlusal side of the shell body, even when thickened as described in some of these examples, may be configured so as not to interfere with intercuspation.

Any of these apparatuses may include a first maxillary engagement projection extending from the occlusal side of the first posterior tooth-receiving region and a second maxillary engagement projection extending from the occlusal side of the second posterior tooth-receiving region, wherein the first and second maxillary engagement projections are configured to apply an expansion force (e.g., an expansion force of about 1 N or more) to a patient's teeth between the first posterior tooth-receiving region and the second posterior tooth-receiving region. The maxillary engagement projection may engage with the maxillary jaw directly and/or a maxillary dental appliance worn on the maxillary jaw, in order to apply force expanding (e.g., outwards in a general buccal direction) to the lower jaw. The maxillary engagement projection may engage with a complimentary projection on the upper jaw (e.g., on the maxillary dental appliance).

For example, the first maxillary engagement projection may extend from a buccal region of the occlusal side of the first posterior tooth-receiving region and the second maxillary engagement projection extends from a buccal region of the occlusal side of the second posterior tooth-receiving region. In some example, the first maxillary engagement projection and the second maxillary engagement projection do not extend from a lingual region of the occlusal side of the first posterior tooth-receiving region or from a lingual region of the occlusal side of the second posterior tooth-receiving region.

The first maxillary engagement projection may be configured to engage with a connector on a maxillary dental appliance device worn on a patient's maxillary arch. The first maxillary engagement projection and the second maxillary engagement projection may each comprise a block of material. In some examples the first maxillary engagement projection and the second maxillary engagement projection each comprises a lingually-facing ramp surface.

In any of these apparatuses and methods, the mandibular dental appliance device (or the combination of the mandibular dental appliance device and the maxillary dental appliance device) may be configured to apply a predetermined minimum force (e.g., about 1 N, about 1.1N, about 1.2 N, about 1.3 N, about 1.4 N, about 1.5 N, etc.) or more of expansion force to a patient's teeth between the first posterior tooth-receiving region and the second posterior tooth-receiving region.

In any of these apparatuses the side of the mandibular The width of the lingual side of the shell body laterally adjacent to the first opening through the occlusal side of the shell body extends at least 60% (e.g., at least 65%, at least 75%, at least 80%, at least 90%, at least 95%, etc.) of a width the lingual side of the shell body lateral to the first posterior tooth-receiving region. For example, the lingual side of the shell body laterally adjacent to the first opening through the occlusal side of the shell body may extend from a gingival line to within about 1 mm (e.g.. within about 0.8 mm, 0.7 mm, 0.6 mm, 0.5 mm, 0.4 mm, 0.2 mm, 0.1 mm, etc.) of the occlusal side of the shell body.

In general, the openings through the occlusal side may be configured to permit eruption of two or more teeth therethrough (e.g., 2 teeth, 3 teeth, etc.). In any of the apparatuses described herein, the shell body may be formed of a relatively rigid material, including a polymeric material. For example, in some cases the shell body comprises a nylon material.

The first and second thickened rims may each have a thickness that is 1.6 mm or greater (e.g., 1.7 mm or greater, 1.8 mm or greater, 1.8 mm or greater, 2 mm or greater, etc.) and the first posterior tooth-receiving region or the second posterior tooth-receiving region may have a thickness of 0.9 mm or less (e.g. 0.8 mm or less, 0.7 mm or less, etc.).

Any of these apparatuses may include an attachment coupling region configured to engage an attachment mounted to a patient's teeth. For example, the attachment coupling region may form a cavity on a lingual side of the first posterior tooth-receiving region.

In any of these apparatuses the lingual and buccal sides of the shell body adjacent to the first opening through the occlusal side of the shell body and the lingual and buccal sides of the shell body adjacent to the second opening through the occlusal side of the shell body may be configured to be offset from an outer surface of a patient's teeth when the device is worn by the patient.

Also described herein are mandibular expansion appliance devices including: a shell body having a lingual side, an occlusal side, and a buccal side, wherein the shell body comprises an anterior tooth-receiving region, a first posterior tooth-receiving region, a second posterior tooth-receiving region, and a first intermediate region between the anterior region and the first posterior tooth-receiving region; wherein the first intermediate region is missing the occlusal and buccal sides of the shell body but include the lingual sides, further wherein the lingual side of the first intermediate region is thicker than the lingual side of the anterior tooth-receiving region.

Any of these devices may include a second intermediate region between the anterior region and the second posterior tooth-receiving region, wherein the second intermediate region is missing the occlusal and buccal sides of the shell body but include the lingual side, further wherein the lingual side of the second intermediate region is thicker than the lingual side of the anterior tooth-receiving region.

In any of these devices the shell body may be a monolithic structure, e.g., may be a single piece with multiple region. The shell body may be formed of a single material (e.g., by direct fabrication, thermoforming, etc.). For example, the shell body may comprise a nylon material.

In any of the shell aligner devices described herein, the lingual and/or buccal sides of the first and second intermediate regions may be configured to conform to a patient's teeth. Alternatively, the lingual and/or buccal sides of the first (and optionally second) intermediate region(s) may be configured to be offset from an outer surface of a patient's teeth when worn. This may allow additional room for the eruption of unerupted teeth.

The lingual sides of the first and/or second intermediate regions may have a thickness that is between about 1.2 and 4 times the thickness of the lingual side of the anterior tooth-receiving region.

As mentioned, any of these devices may include a first maxillary engagement projection extending from the occlusal side of the first posterior tooth-receiving region and a second maxillary engagement projection extending from the occlusal side of the second posterior tooth-receiving region. The first and second maxillary engagement projections may be configured to apply 1 N or more of expansion force to a patient's teeth between the first posterior tooth-receiving region and the second posterior tooth-receiving region. The first maxillary engagement projection may extend from a buccal region of the occlusal side of the first posterior tooth-receiving region and the second maxillary engagement projection extends from a buccal region of the occlusal side of the second posterior tooth-receiving region. The first maxillary engagement projection and the second maxillary engagement projection may not extend from a lingual region of the occlusal side of the first posterior tooth-receiving region or from a lingual region of the occlusal side of the second posterior tooth-receiving region. The first maxillary engagement projection and the second maxillary engagement projection may each comprise a buccalizing reaction surface that is configured to engage with a connector on a maxillary dental appliance device worn on a patient's maxillary arch to apply an expansion force between the first and second posterior tooth-receiving portions. In some examples the first maxillary engagement projection and the second maxillary engagement projection each comprises a lingually-facing ramp surface.

The mandibular dental appliance device may be configured to apply 1 N or more of expansion force to a patient's teeth between the first posterior tooth-receiving region and the second posterior tooth-receiving region.

The lingual sides of the first intermediate regions may have a thickness that is 2 mm or greater and the buccal sides of the first posterior tooth-receiving region or the second posterior tooth-receiving region has a thickness of 0.9 mm or less. As mentioned, any of these devices may include an attachment coupling region configured to engage an attachment mounted to a patient's teeth.

Also described herein are systems including any of the upper arch devices (e.g., maxillary dental appliance devices) and lower arch devices (e.g., mandibular dental appliance devices) described herein. For example, the mandibular dental appliance device may be any of the apparatuses described herein. In particular, the mandibular dental appliance device and the maxillary dental appliance device may engage with each other, including but not limited to when the subject bites down, so that the maxillary dental appliance device, which may be generally more right because of the palatal region, may exert an expansion force on the mandibular dental appliance device and therefore the teeth of the lower jaw.

For example, an orthodontic system may include: a maxillary dental appliance device having a first shell body comprising an anterior tooth-receiving region and a pair of posterior tooth-receiving regions that are separated by a palatal region; and a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the second shell body between the anterior tooth-receiving region and each of the posterior tooth-receiving regions forms an opening to allow extrusion of teeth therethrough, and a pair of maxillary engagement projections extending from the occlusal sides of the posterior tooth-receiving regions, wherein the pair of maxillary engagement projections are configured to engage with the maxillary dental appliance device to apply an expansion force (e.g., 1 N or more) to a patient's teeth between the posterior tooth-receiving regions of the mandibular dental appliance device.

In some examples the mandibular dental appliance device does not include the thickened regions around the openings, while in some examples it does. For example, the palatal region may be more than twice as thick as a thickness of the anterior tooth-receiving region or either of the posterior tooth-receiving regions. The mandibular dental appliance device may include a thickened rim around the opening through the occlusal side of the first shell body, wherein the thickened rim has a thickness that is more than twice a thickness of the posterior tooth-receiving regions.

The maxillary engagement projections may each extend from a buccal region of the occlusal side of the posterior tooth-receiving regions. For example, the maxillary engagement projections may not extend from a lingual region of the occlusal side of the posterior tooth-receiving regions. Any of these apparatuses may include a pair of connectors on the maxillary dental appliance device configured to engage with the maxillary engagement projections. In some examples the maxillary engagement projections each comprise a block of material. In some examples the maxillary engagement projections may each include a lingually-facing ramp surface.

For example, a system for expanding a patient's mandibular arch may include: a maxillary dental appliance device (e.g., shell aligner, palatal expander, etc.) comprising: a first tooth receiving region, a second tooth receiving region and a palatal region extending therebetween, wherein each of the first and second tooth receiving regions comprises a mandibular engagement projection comprising a maxillary reaction surface extending from an occlusal surface; and a mandibular dental appliance device (e.g., shell aligner) comprising: an anterior tooth-receiving region, a first posterior tooth-receiving region, a second posterior tooth-receiving region, wherein each of the first and second posterior tooth receiving regions comprises a maxillary engagement projection comprising a buccalizing reaction surface, wherein the maxillary reaction surface is configured to engage with the buccalizing reaction surface when the maxillary dental appliance device and the mandibular dental appliance device are worn, and to apply a resulting force between the first posterior tooth-receiving region and the second posterior tooth-receiving region to expand the mandibular arch. As mentioned above, in some examples the resulting force is 1 N or greater.

In any of these systems the buccalizing reaction surface(s) may face the buccal direction. In some examples the buccalizing reaction surfaces face each other. In some examples the buccalizing reaction surface has an angle relative to a plane through the anterior tooth-receiving region, the first posterior tooth-receiving region, and the second posterior tooth-receiving region of the mandibular dental appliance device that 10 degrees or greater (e.g., 12 degrees or greater, 15 degrees or greater, 17 degrees or greater, 20 degrees or greater, 22 degrees or greater, 25 degrees or greater, 27 degrees or greater, 30 degrees or greater, etc.).

Either or both the first posterior tooth-receiving region and the second posterior tooth-receiving region may include an opening through an occlusal side of the mandibular dental appliance device between the anterior tooth-receiving region and the first posterior tooth-receiving region, configured to permit eruption of one or more teeth therethrough.

The mandibular dental appliance device may be missing the buccal side of the mandibular dental appliance device adjacent to the opening through the occlusal side, further wherein the lingual side of the mandibular dental appliance device adjacent to the opening through the occlusal side is thicker than the lingual side of the anterior tooth-receiving region. In any of these systems the mandibular dental appliance device may be one of a plurality of mandibular dental appliance devices in a sequence of mandibular dental appliance devices configured to be worn as part of a treatment plan to expand the patient's mandibular arch, wherein a separation between the maxillary engagement projections of the mandibular dental appliance devices in the plurality of mandibular dental appliance devices increases across the sequence of mandibular dental appliance devices.

Also described herein are treatment plans including these apparatuses and methods of forming these treatment plans. For example, a treatment planning method may include: generating, from a digital model of a patient's teeth, a model of a maxillary dental appliance device having a first shell body comprising an anterior tooth-receiving region and a pair of posterior tooth-receiving regions that are separated by a palatal region; generating, from the digital model of the patient's teeth, a model of a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the first shell body between the anterior tooth-receiving region and each of the posterior tooth-receiving regions forms an opening to allow extrusion of the patient's teeth therethrough, and a pair of mandibular engagement projections extending from the occlusal sides of the posterior tooth-receiving regions; further wherein the pair of mandibular engagement projections are configured to engage with the mandibular dental appliance device to apply an expansion force (e.g., 1 N or more) to the patient's teeth between the posterior tooth-receiving regions.

Any of these methods may include fabricating the mandibular dental appliance device from the digital model of the mandibular dental appliance device and fabricating the maxillary dental appliance device from the digital model of the maxillary dental appliance device. Fabricating may include fabricating by a direct fabrication technique (e.g., three-dimensional (3D) printing, stereolithography, thermoplastic extrusion, laser sintering, etc.). As mentioned, the palatal region may be greater than twice as thick as a thickness of the anterior tooth-receiving portion or either of the posterior tooth-receiving regions. Any of these methods may include receiving the digital model of the patient's teeth. Generating the model of the mandibular dental appliance device and the maxillary dental appliance device may comprise generating a digital model of the mandibular dental appliance device and the maxillary dental appliance device.

Generating the model of the mandibular dental appliance device and the maxillary dental appliance device may include configuring the mandibular dental appliance device and the maxillary dental appliance device so that the patient's teeth are retained in a predetermined position following an orthodontic treatment. In some examples, generating the model of a mandibular dental appliance device comprises setting a thickness of a thickened rim around each of the openings through the occlusal side of the first shell body to a thickness that is more than twice a thickness of the posterior tooth-receiving regions.

Also described herein is software for performing any of these methods, including but not limited to non-transitory computer-readable medium including contents that are configured to cause one or more processors to perform these methods. For example, described herein are non-transitory computer-readable media including contents that are configured to cause one or more processors to perform a methods comprising: generating, from a digital model of patient's teeth, a model of a maxillary dental appliance device having a first shell body comprising an anterior tooth-receiving region and a pair of posterior tooth-receiving regions that are separated by a palatal region, and a pair of maxillary engagement projections extending from the occlusal sides of the posterior tooth-receiving regions; generating, from the digital model of the patient's teeth, a model of a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the second body between the anterior tooth-receiving region and each of the posterior tooth-receiving regions forms an opening to allow extrusion of teeth therethrough, and a pair of mandibular engagement projections extending from the occlusal sides of the posterior tooth-receiving regions; further wherein the pair of mandibular engagement projections are configured to engage with the maxillary dental appliance device to apply an expansion force to the patient's teeth between the posterior tooth-receiving regions.

Any of these methods and apparatuses (including software for performing any of these methods) may include allowing a user to include, remove or modify one or more attachment coupling region(s) and/or attachments for use with these attachment coupling regions. For example, the software may include, as part of the user interface, user-selectable controls (toggles, inputs, etc.) for adding, removing or adjusting the shape, size and/or location of one or more attachment coupling region(s) as part of the mandibular and/or maxillary devices described herein. Alternatively or additionally, any of these methods or apparatuses may be configured to allow a user to adjust the thickness of all or a portion of the devices (e.g., maxillary and/or mandibular devices) of one or more predetermined regions, such as the rim extending around the openings through the occlusal side of the shell body, and/or of one or more arbitrarily-selected regions. For example, a user interface may include a user-selectable control for selecting and adjusting the thickness of all or portion (preset portions or user-selected portions) of a device.

Also described herein are methods of making, e.g., designing, forming, etc., any of the dental appliances described herein, including mandibular dental appliance devices and/or maxillary dental appliance devices. For example, a method for forming a set of dental appliances may include: forming of a maxillary dental appliance device having a first shell body comprising an anterior tooth-receiving region and a pair of posterior tooth-receiving regions that are separated by a palatal region; forming a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the second shell body between the anterior tooth-receiving region and each of the posterior tooth-receiving regions forms an opening to allow extrusion of teeth therethrough, and a pair of mandibular engagement projections extending from the occlusal sides of the posterior tooth-receiving regions; further wherein the pair of mandibular engagement projections are configured to engage with the mandibular dental appliance device to apply an expansion force to a patient's teeth between the posterior tooth-receiving regions.

Forming the mandibular dental appliance device and the maxillary dental appliance device may include forming by direct fabrication (e.g., three-dimensional (3D) printing, etc.).

All of the methods and apparatuses described herein, in any combination, are herein contemplated and can be used to achieve the benefits as described herein.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

A better understanding of the features and advantages of the methods and apparatuses described herein will be obtained by reference to the following detailed description that sets forth illustrative embodiments, and the accompanying drawings of which:
FIGS. 1A-1E illustrate an example of an upper jaw (e.g., maxillary) dental appliance device that may engage with a mandibular dental appliance device to exert an expansion force as described herein. FIGS. 1A-1C show side perspective, bottom and top views, respectively. FIG. 1D shows a bottom view of the maxillary dental appliance device of FIGS. 1A-1C applied to an upper arch. FIG. 1E is a heat mapping of the maxillary dental appliance device of FIGS. 1A-1D showing regions of different thickness as described herein.
FIGS. 2A-2C illustrate one example of a mandibular dental appliance device. In this example the dental appliance device includes a thickened region around the openings through which erupting teeth may pass. FIG. 2A shows a perspective view. FIGS. 2B and 2C show bottom and top views, respectively.
FIGS. 3A and 3B show top and side perspective views of another example of a mandibular dental appliance device similar to that shown in FIGS. 2A-2C.
FIG. 4 is a heat map of an example of a mandibular dental appliance device similar to that shown in FIGS. 3A-3B.
FIGS. 5A-5B illustrate examples of mandibular dental appliance devices and maxillary dental appliance devices engaged with each other to apply an expansion force on the lower (mandibular) jaw.
FIG. 6 is an example of a mandibular dental appliance device and a maxillary dental appliance device engaged with each other to apply an expansion force on the lower (mandibular) jaw. In this example the mandibular dental appliance device includes a ramp surface (increasing from the lingual to buccal sides to engage with a maxillary dental appliance device resulting in an expansion force as described herein.
FIG. 7 is an example of a mandibular dental appliance device and a maxillary dental appliance device engaged with each other to apply an expansion force on the lower (mandibular) jaw.
FIG. 8 is an example of a dental appliance device including a combined mandibular and maxillary body (e.g., mouthpiece) configured to apply an expansion force on the lower (mandibular) jaw.
FIG. 9 is another example of a dental appliance device including a mandibular dental appliance device that is connected to a maxillary dental appliance device to apply an expansion force on the lower (mandibular) jaw.
FIG. 10 illustrate one method of treating a patient using the dental appliance devices described herein.
FIGS. 11A-11B illustrate examples of mandibular dental appliance devices in which portions of the buccal and occlusal sides are removed.
FIGS. 12A-12C illustrate examples of mandibular dental appliance devices in which the buccal and lingual sides adjacent to the occlusal cut-out regions are configured to allow additional room for erupting teeth.
FIG. 13 schematically illustrates a system for expanding a patient's mandibular arch as described herein.

### DETAILED DESCRIPTION

Described herein are maxillary dental appliance devices and/or mandibular dental appliance devices that may apply a relatively high (e.g., 1 N or greater) expansion force on the mandibular (e.g., lower) dental arch. These apparatuses (devices, systems, etc.) and methods (e.g., methods of using, method of making, etc.) may be particularly useful for treating younger patients, including patients whose teeth are continuing to grow in (e.g., erupt). For example, these methods and apparatuses may be configured as dental/orthodontic retainer apparatuses for helping retain teeth following all or a portion of a dental treatment plan. These methods and apparatuses may be referred to in some examples as phase I/phase II retainers, which may be used during a treatment plan, including between different phases of a treatment plan. In general, these apparatuses may provide sufficient force so as to assist or maintain arch expansion, e.g. to reduce anterior crowding.

For example, described herein are maxillary dental appliance devices having a first shell body comprising an anterior tooth-receiving region and a pair of posterior tooth-receiving regions that are separated by a palatal region. These maxillary dental appliance devices may include any of the features described herein, including "cut out" regions to allow erupting teeth to erupt substantially uninhibited by the maxillary dental appliance device, e.g., by removing the occlusal surface or cover from the process. In general, these apparatuses may be configured to include a palatal region that is thicker and/or more supportive as compared to the more peripheral tooth-receiving regions.

The apparatuses described herein may instead or in addition include a mandibular dental appliance device having a mandibular shell body comprising a lingual side, an occlusal side and a lateral side, wherein the mandibular shell body further comprises an anterior tooth-receiving region and a pair of posterior tooth-receiving regions, wherein a portion of the occlusal side of the mandibular shell body between the anterior tooth-receiving region and each of the posterior tooth-receiving regions forms an opening to allow extrusion of teeth therethrough, and a pair of maxillary engagement projections extending from the occlusal sides of the posterior tooth-receiving regions. The pair of maxillary engagement projections may be configured to engage with the maxillary dental appliance device (or in some examples, directly with the teeth of the maxillary jaw) to apply 1 N or more of expansion force to a patient's teeth between the posterior tooth-receiving regions of the mandibular dental appliance device.

In one, non-limiting, exemplary use case of the apparatuses described herein the apparatuses may be used for a patient, such as a child, that is treated with an orthodontic appliance or appliances (e.g., between the ages of 7-11) initially, then later, after the patient has continued to grow, may be treated with a second orthodontic appliance or series of appliances; any of the apparatuses described herein may be used between these treatments to maintain the orthodontic positioning, including in particular the arch width, with some (e.g., overnight) use in order to support exfoliation and eruption of the patient's teeth.

Currently, there are no good options to provide this functionality. For upper arch, e.g., maxillary arch, retainers, the well-known Theroux retainer has been described, and includes cut-out regions for erupting teeth as well as a palatal region, however proposals to create a simar Theroux-type of retainer for the lower arch (mandibular arch) have failed, as they are unable to provide sufficient retaining force (e.g., force of greater than 1 N), particularly where the cut-out regions are sufficiently large for two or more teeth, as they lack sufficient stiffness and support while remaining lightweight.

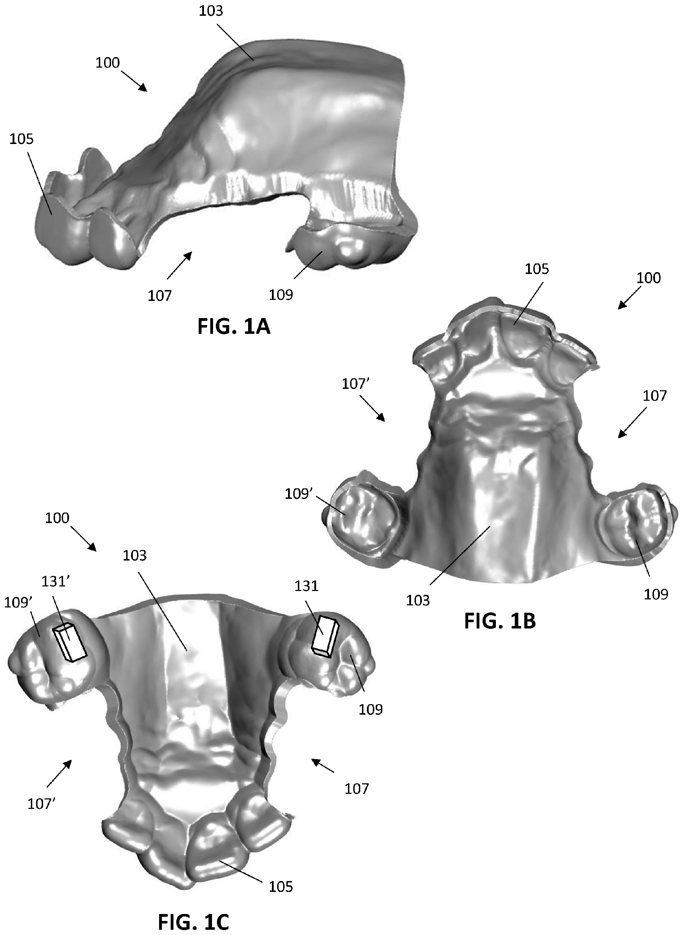

In general, the apparatuses described herein may also include an upper arch (maxillary) dental appliance device. For example, FIGS. 1A-1E illustrate one example of a maxillary dental appliance device 100 that includes a shell body having a palatal region 103, an anterior tooth-receiving portion 105, a pair of posterior tooth-receiving regions 109, 109' and cut-out regions 107, 107' that may permit one or more teeth to erupt from the upper arch. This design may provide an extremely stiff structure on the upper jaw; the extra stiffness in this example may come in part from the transpalatal coverage of the palatal region 103. FIGS. 1B and 1C show bottom and top views, respectively. The anterior tooth-receiving region may fit the anterior teeth, while the two posterior regions may fit posterior teeth. The palatal region may be configured to fit against (or may be slightly separated from) the palate when worn. The entire apparatus may be custom designed and fabricated based on a model (including but not limited to a digital model, such as a digital scan, as may be taken from an intraoral scanner).

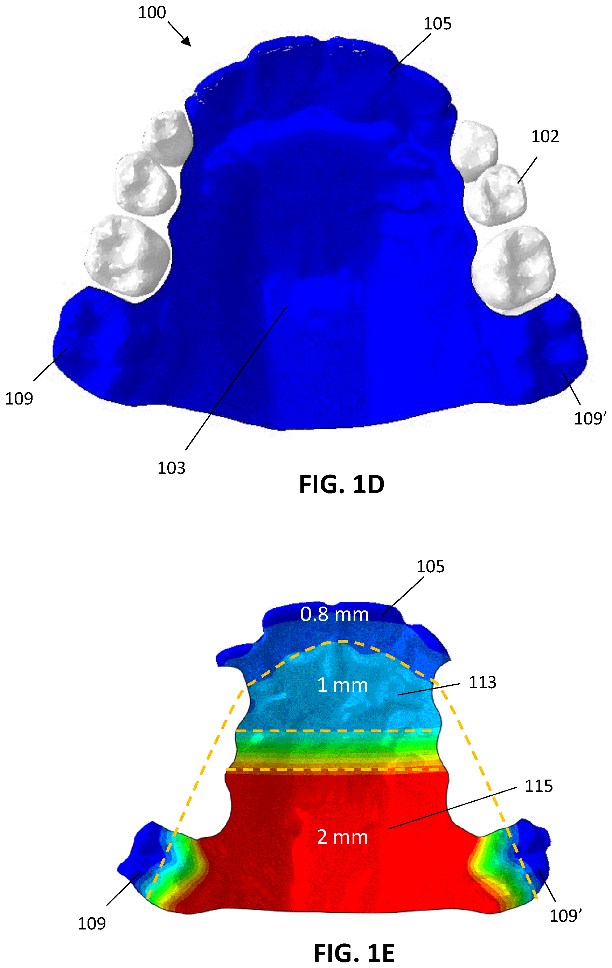

FIG. 1D shows the maxillary dental appliance device 100 worn over teeth 102 of an upper arch. In general, the apparatus may be configured to include regions of different thicknesses that may provide enhanced comfort and stiffness. For example, FIG. 1E illustrates one example of a maxillary dental appliance device 100 showing different regions of different thicknesses. In this example the first shell body includes the anterior tooth-receiving region 105 formed of a relatively thin region of material (e.g., shown here as 0.8 mm) transitioning to an anterior palatal region 113 that has slightly thicker diameter (e.g., 1 mm), which in turn transitions to a much thicker posterior palatal region 115 between the molars, and in particular, between the posterior tooth-receiving regions 109, 109'. This region has the highest thickness of, e.g., 2 mm. The posterior tooth-receiving regions 109, 109' may themselves have a thickness that is much thinner than the palatal region, including the same minimal thickness as the anterior tooth-receiving region (e.g., 0.8 mm), at least over the buccal and occlusal surfaces (transitioning to the thicker diameters at the lingual sides).

The high stiffness and stability of these maxillary dental appliance devices may be used to provide a stability to the mandibular dental appliance devices, even where they may, themselves, not provide sufficiently high retaining forces (e.g., expansion forces). Thus, in any of the apparatuses described herein, either or both the maxillary dental appliance device and/or the mandibular dental appliance device may include one or more occlusal features that may transfer or provide leverage for an expansion force on the mandibular arch of greater than a threshold amount, such as greater than about 1 N.

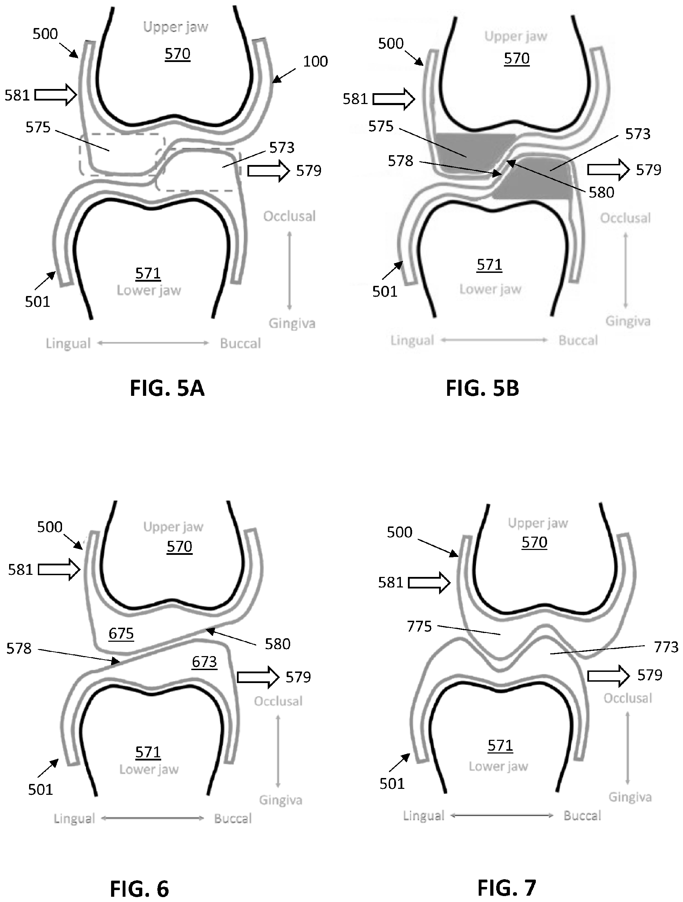

The specific shape of the occlusal feature(s) may vary, but a in general, may be configured to enables a horizontal force exerted from the retainer on the upper jaw to that on the lower jaw. Examples of this are shown and illustrated in FIGS. 5A-5B, 6, 7, 8 and 9, described in greater detail below. For example, blocks 131, 131' (shown schematically in FIG. 1C) may be added to the occlusal plane of the retainers. In some examples, the width of the block(s) may be about half of the width (or less) of the teeth width along the buccal-lingual direction. For example, at about the center of the teeth, the edge of the blocks may be slanted (e.g., ramped) so that at occlusion, the contact between the blocks in the mandibular dental appliance device and the maxillary dental appliance device my push the mandibular teeth outwards, e.g., towards the buccal direction, thus helping with mandibular arch expansion. This configuration may result in mandibular arch expansion, instead of maxillary arch retraction because the stiffness of the maxillary dental appliance device may support the mandibular dental appliance device.

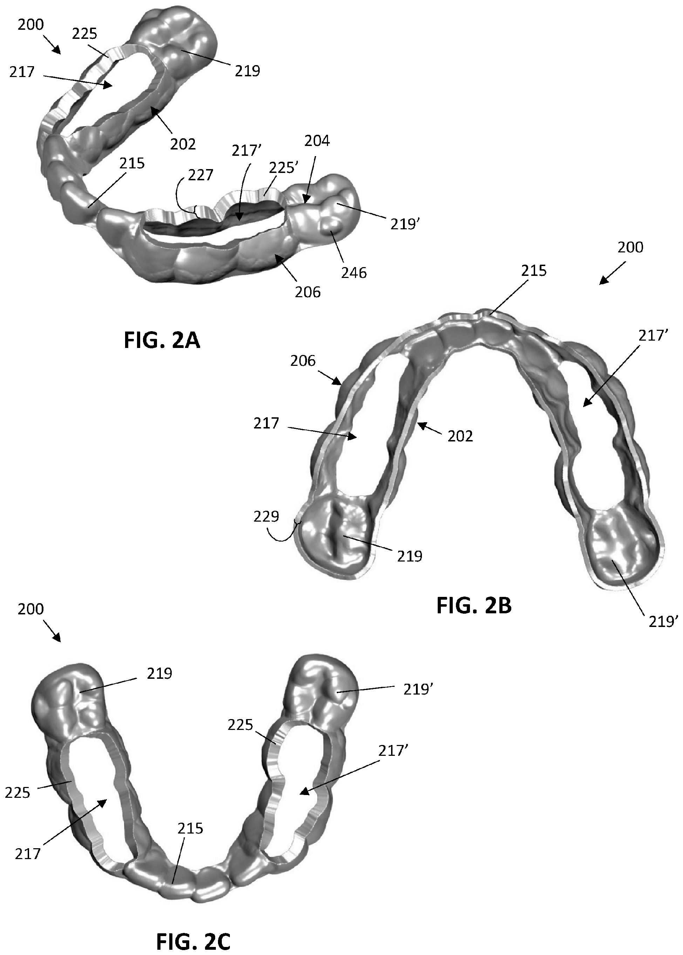

FIGS. 2A-2C illustrate an example of a mandibular dental appliance device 200 having a shell body comprising a lingual side 202, an occlusal side 204 and a buccal/lateral side 206. The shell body may be configured to include an anterior tooth-receiving region 215 and a pair of posterior tooth-receiving regions 219, 219'. A portion of the occlusal side of the shell body between the anterior tooth-receiving region and each of the posterior tooth-receiving regions may be cut-out (e.g., missing) forming an opening 217, 217' that may allow extrusion of teeth therethrough. As mentioned above, any of these mandibular dental appliance devices may include a pair of maxillary engagement projections (not shown in FIGS. 2A-2C) extending from the occlusal sides of the posterior tooth-receiving regions that may engage either directly with the patient's maxillary arch in some examples or, preferably, with a maxillary dental appliance device. FIG. 2A shows a top perspective view (showing the occlusal surface) and FIG. 2B shows a bottom view (showing the tooth-receiving portions in the anterior 215 and posterior 219, 219'. FIG. 2C shows a top view, showing the occlusal surface.

Any of the apparatuses described herein may be configured or may include a mandibular dental appliance device 200 that is configured to provide enhanced comfort and higher stiffness, so that it provides sufficient anti-relapse force, particularly for lower arch expansion, while maintaining the openings (e.g., cutout region(s)) that are surrounded by the lingual 202 and buccal 206 sides (e.g., an enclosed opening) that beneficially allow for extrusion of erupting teeth. However, as determined experimentally, these openings (cutout regions) may be detrimental to maintaining stiffness sufficient to prevent relapse. As a result, any of the mandibular dental appliance devices described herein may be configured to provide an expansion force of greater than 1 N and a moment of greater than 5 N-mm by, e.g., thickening the region locally around the opening(s).

This local thickening of the opening 217, 217' can be seen, for example, in FIGS. 2A-2C. In FIG. 2A and 2C, the thickness 227 of the opening 217 is configured as a thickened rim 225 that extends completely around the openings 217, 219 through the occlusal side of the shell body. The thickened rims 225 may each have a thickness 227 that is greater than the thickness 229 of the other region of the device, including the thickness of the tooth-receiving regions, such as the anterior and/or posterior tooth receiving regions. In particular, just the region of the device local to the openings 217, 217' may be thickened to this extent in the mandibular dental appliance 200. In this example, the thickness of the thickened perimeter of the opening(s) is at least twice as thick as a thickness 229 of the first posterior tooth-receiving region 219 or the second posterior tooth-receiving region 219'.

In general, the apparatuses (e.g., the mandibular dental appliance devices and/or maxillary dental appliance devices) may be formed of any appropriate material. For example, the material may include a material having a material property that has a modulus of elasticity (E) of greater than 500 MPa (e.g., greater than 600 MPa, greater than 700 MPa, greater than 750 MPa, between 500 and 1500 MPa, between 700 and 1300 MPa, etc.). For example, the material may be a polymeric material, such as but not limited to a polyamide (e.g., nylon).

Any of the mandibular dental appliance devices and/or the maxillary dental appliance devices may be configured for use with one or more attachments (or pairs of attachments). Attachments mounted to the teeth may be used to aid in retention of the devices to the teeth; the devices may include attachment coupling regions configured to engage an attachment mounted to a patient's teeth. For example as shown in FIGS. 2A and 2B, the apparatus may include an attachment coupling region 246.

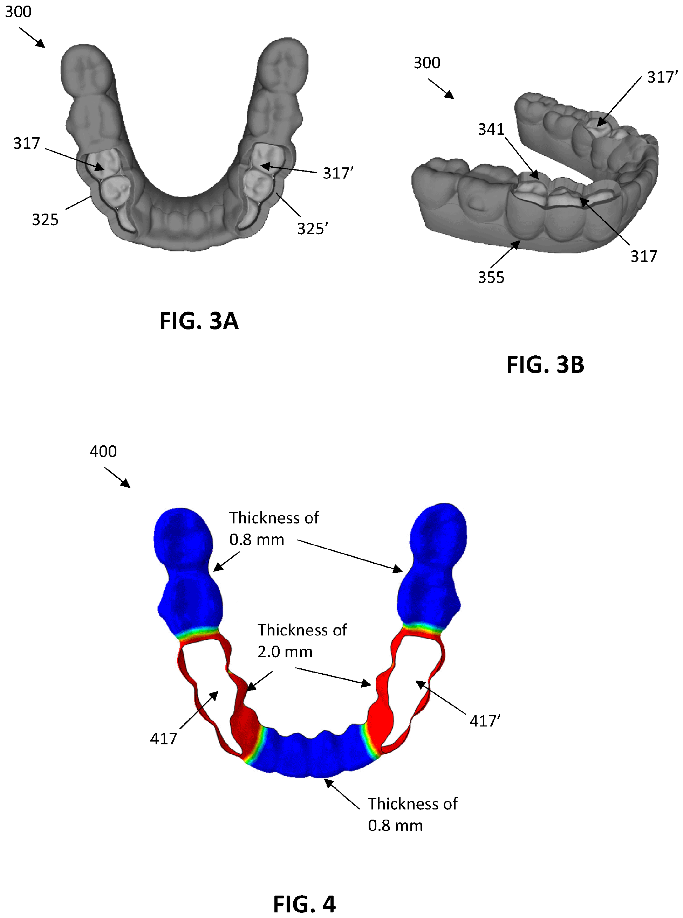

FIG. 3A illustrates another example of an apparatus (e.g., a mandibular dental appliance device 300) that includes a pair of openings (cutout regions) 317, 317' that have a thickened local perimeter 325, 325' around the openings. In this example, the openings may permit extrusion of teeth and may generally provide additional space for the teeth while maintaining a high degree of force to retain, e.g., expansion of the arch. FIG. 3B shows a side perspective view of the device of FIG. 3A, showing that in this example the lateral sides 355 of the device 300 (e.g., the buccal and lingual sides) may be long (the length is shown exaggerated in this example). In some examples the height of the lateral sides of the device may begin at or just above the gingival line (or in some examples, just below) and may extend up the side of the device toward the occlusal surface where to the occlusal cut-out regions (opening 317, 317').

In some examples the apparatus may include an additional offset 341 from the surfaces of the teeth, which may permit better exfoliation support. For example, the apparatus may be configured to provide between 0.02- to 1 mm offset (e.g., about 0.5 mm offset) from the teeth surface.

FIG. 4 is a map showing the different thicknesses of an example of a mandibular dental appliance device 400 including a pair of openings 417, 417' through the device that include a thickened region 425 having a thickness of (in this example) 2.0 mm as compared to the thickness of the rest of the device 436 that is approximately 0.8 mm in this example. Other thicknesses may be used, but the ratio of thicknesses (e.g., the relative thicknesses of the region surrounding the openings to the rest of the device, e.g., the anterior and/or posterior tooth-receiving regions) may be greater than 2x (e.g., 2x, 2.1x, 2.2x, 2.3x. 2.4x, 2.5x, 2.6x, 2.7x, 2.8x, 3x, etc.). The map shown in FIG. 4 shows a view looking down (e.g., towards the occlusal surface, in x,y). A thickness profile along the length (e.g., along the putative z axis) may have a non-uniform distribution as well. For example, the thickness of the shell wall may be thinner in some regions than in others. In some examples the wall of the shell may be thinner at the occlusal end of the cut-out regions, which may enhance comfort.

Surprisingly, this configuration, even without an engagement region engaging with the maxillary teeth or a maxillary dental appliance device, may provide sufficient stiffness and support to result in an expansion force of 1 N or more, regardless of the size of the opening (e.g., opening for one tooth, two teeth, or three teeth). Generally the larger the opening, the less likely that the device will be able to provide sufficient expansion force. Alternatively, the apparatus may include maxillary engagement projections extending from the occlusal sides of the posterior tooth-receiving regions. The maxillary engagement projections in any of these examples may be configured to apply 1 N or more of expansion force (e.g., 1.2 N, 1.4 N, 1.5 N, 1.6 N, 1.8 N, 2.0 N, etc.) to a patient's teeth between the posterior tooth-receiving regions.

FIGS. 5A-5B illustrate two examples of engagement projections (e.g., maxillary and mandibular engagement projections) that may be included in any of these devices. In FIG. 5A, the system includes a mandibular dental appliance device 501 and a maxillary dental appliance device 500. Both devices are configured to include engagement projections; the mandibular dental appliance device 501 includes a maxillary engagement projection 573 ("lower jaw block") and the maxillary dental appliance device 500 includes a mandibular engagement projection ("upper jaw block") 575. In FIGS. 5A and 5B the maxillary engagement projection 573 is positioned on the occlusal surface of the posterior tooth receiving portion and is on a more buccal side of the occlusal surface, whereas the mandibular engagement projection 575 of the maxillary dental appliance device 500 is on the more lingual side, so that the force applied by the maxillary dental appliance device 500 may be directed buccally (outward) as an expansion force on the lower jaw. In FIG. 5A the engagement projections may be hollow, while in FIG. 5B the engagement projections are solid (e.g., filled).

The mandibular engagement projection includes a maxillary supported reaction surface 580 that may apply force against the corresponding reaction surface on the maxillary engagement projection of the mandibular dental appliance device; in particular, on the buccalizing reaction surface 578 of the maxillary engagement projection. In general, the maxillary dental appliance device 500 may include a palatal region that acts as a brace or support, resisting compression, so that when the patient closes their jaws, the maxillary supported reaction surface 580 applies a maxillary supporting force 581 against the buccalizing reaction surface 579, resulting in a buccalizing force (buccalizing resulting force 579) on the teeth of the lower jaw, through the mandibular dental appliance. The position and shape of the maxillary and mandibular engagement projections may resolve the direction of the buccalizing force, though in general it may be configured to widen the mandible by applying the force in the buccal direction.

There are many different ways to design this engagement projections, so that they may allow the horizontal interaction between the mandibular dental appliance device 501 and the maxillary dental appliance device 500 (on the upper and lower jaw). In some examples the design may depend on fabrication methods of the device. For example, for direct fabrication (e.g., printing methods), engagement projections could be directly incorporated into the device geometry. If the apparatuses described herein are formed by a thermoforming method, prefabricated blocks could be inserted into pockets and welded to thermoformed aligners (e.g., FIG. 5B). Various angles of the engagement projections (e.g., block features) could be utilized to tailor jaw expansion forces based on patient treatment needs. For example, FIG. 6 shows an example in which the engagement projections include ramp surfaces. In this example the maxillary engagement projection 673 extending from the mandibular dental appliance includes a ramp extending over the entire occlusal surface of the posterior tooth receiving region. A complimentary ramp surface of the mandibular engagement projection 675 extending from the maxillary dental appliance may tend to drive expansion of the lower jaw when worn. In this example the force applied (e.g., the resulting expansion force) may be adjusted by the force of compression of the jaw (e.g., the applied bite force).

In general, engagement projections having any of these configuration may be used as part of a treatment plan at one or more stages of the treatment plan. For example, the engagement projections may be used during an initial portion (initial stages) of a treatment plan, but not later in the treatment plan. Alternatively or additionally the force (e.g., expansion force) applied by the engagement projections may be adjusting during the stages of the treatment plan. Thus, different stages of the treatment plan may include engagement projections configured to apply different amounts of expansion force and may be configured differently to achieve this. In some examples, different stages of the treatment plans may include different types of engagement projections. For example, the initial stage(s) of a treatment plan including engagement projections may include ramp-shaped engagement projections similar to those shown in FIG. 6, which may provide a varying expansion force depending on the bite force applied, while later stages may include engagement projections similar to those shown in FIGS. 5A-5B or 7 which, while they may include a ramp shaped component, include stop or box-shape that limits the force applied. Alternatively the initial stages may include bite-block shaped engagement projections similar to those shown in FIGS. 5A-5B, while later stages may include ramp-shaped engagement projections, allowing the patient to adjust the expansion force based on applied bite force. In any of the ramp-shaped engagement projections the angle of the ramp may be selected and/or may vary depending on the stage. For example, the steepness of the ramp may decrease or increase as stages increase. In FIGS. 6 and 7, as in FIGS. 5A-5B, the maxillary and mandibular engagement projections may each include reaction surfaces, e.g., the maxillary engagement projection may include a ramp-shaped maxillary supported reaction surface, and the mandibular engagement projection may include a ramp-shaped buccalizing reaction surface 578, as shown in FIG. 6. In FIG. 7 the buccalizing reaction surface may be part of an intercuspation shape with the maxillary engagement projection, although the forces may be applied in the same directions as in the examples of FIGS. 5A-5B and 6.

In some examples the retainer for the upper and lower jaw may engage one another to provide the higher expansion force For example, as shown in FIG. 7, the occlusal surface of the upper (maxillary 775) and lower (mandibular 773) engagement projections of the dental appliances may releasably couple together to provide a laterally outward (expansion) force.

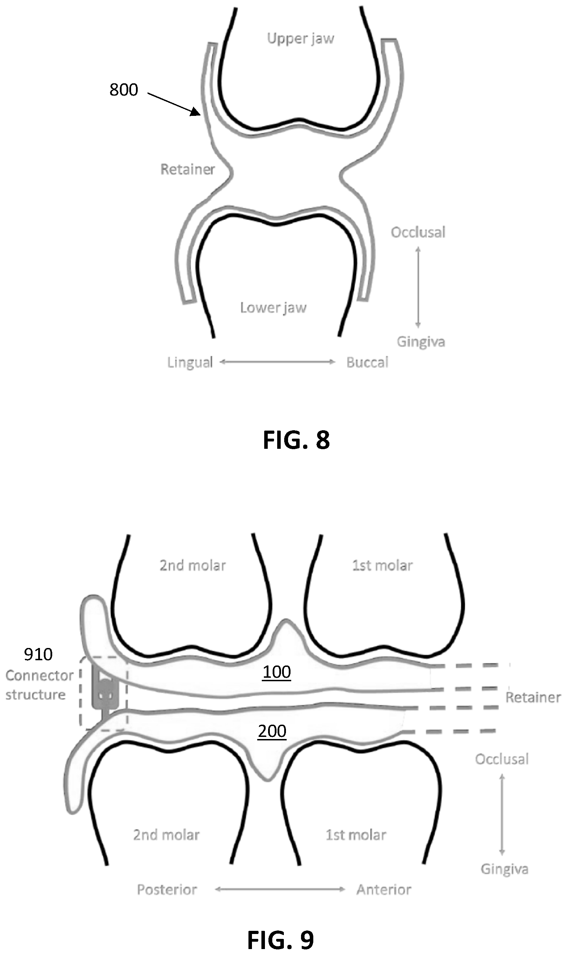

Alternatively or additionally, the mandibular dental appliance device and maxillary dental appliance devices may be configured to integrate into a single piece. Two of the examples are shown in FIGS. 8 and 9.

Similar to the configurations shown in FIGS. 5A-5B, 6 and 7, the examples shown in FIGS. 8 and 9 may also allow the extra stiffness on the upper jaw to be exerted to the lower jaw teeth. For example in FIG. 8, the maxillary dental appliance device (upper) and mandibular dental appliance device (lower jaw) are one integrated part 800 and cannot move with respect to each other. While this design provides sufficient stiffness between them, users may keep their occlusion status in order for the device to function. In FIG. 9, this may be eased by including a connector structure 910 between the maxillary dental appliance device (upper) and mandibular dental appliance device (lower jaw). This connector structure 910 may allow the relative movement along the occlusal-gingiva direction and the relative rotation between the upper and lower jaw retainer, while the relative movement along the arch expansion direction is prohibited. Thus, this design may allow the transfer of the arch expansion force from the upper jaw to the lower jaw, even when users open their mouth.

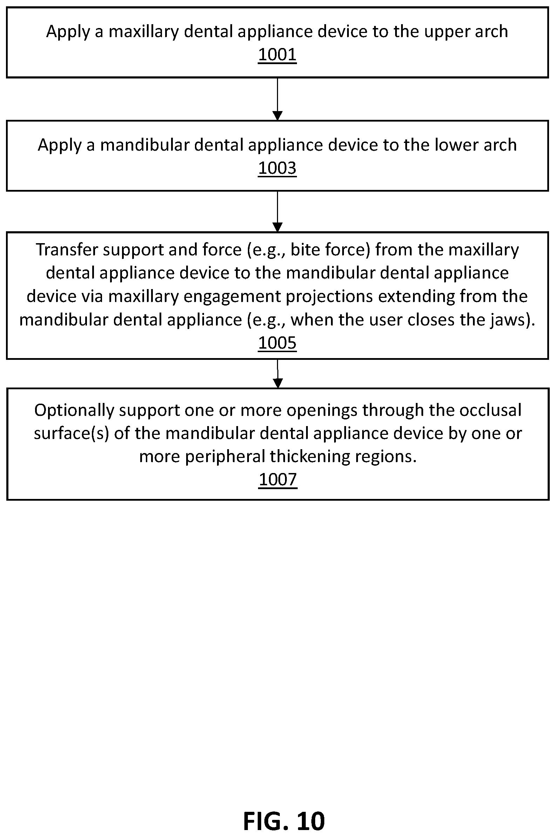

In operation, any of these apparatuses may be used to retain the teeth, and particularly the lower jaw teeth, when wearing the apparatuses, as described above. For example, FIG. 10 illustrate one example of a method for treating a patient using apparatuses as described above. For example, in FIG. 10, a maxillary dental appliance device and a mandibular dental apparatus may be applied to the upper 1001 and lower arch 1003. Once worn, a pair of maxillary engagement projections may engage with the maxillary dental appliance device (e.g., either the device directly or with mandibular engagement projections on the maxillary dental appliance device). This engagement may transfer force and/or support from the maxillary dental appliance device, resulting in an expansion force in the lower jaw 1005. Optionally, in any of these apparatuses and methods the one or more openings through the occlusal surface of the mandibular dental appliance device, permitting extrusion of one or more teeth, may be supported by the thickening region around the opening(s) of the mandibular dental appliance device 1007.

### Additional Examples

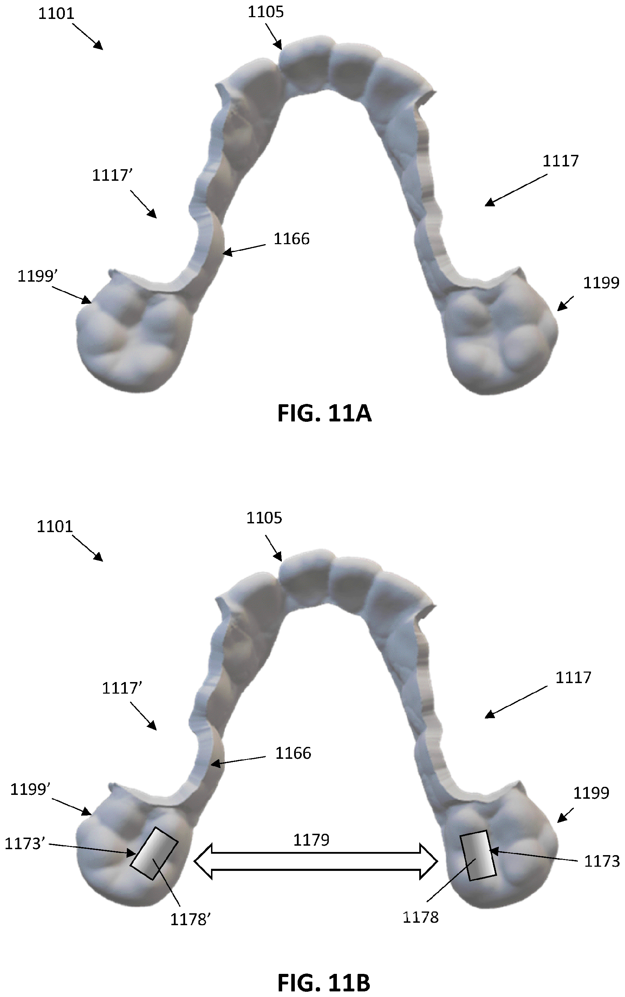

FIGS. 11A-11B, 12A-12C and 13 all illustrate additional examples illustrating the features described above. For example, FIG. 11A shows an example of a device (e.g., a mandibular appliance device) similar to that illustrated above. In FIG. 11A the mandibular appliance device 1101 includes a shell body having a lingual side, an occlusal side, and a buccal side. The shell body includes at least three regions, an anterior tooth-receiving region 1105, a first posterior tooth-receiving region 1199 and a second posterior tooth-receiving region 1199. In this example the device also include an intermediate region 1117, 1117' between the anterior region and the first posterior tooth-receiving region. The intermediate region may be configured as a cut-out region in which the occlusal and buccal sides of the shell body are absent, but the lingual side connects the anterior tooth receiving portion to the posterior tooth-receiving portion. This lingual side may be thickened 1166, as shown in this example and/or may be otherwise reinforced.

In some examples the mandibular appliance device is configured as a mandibular expansion appliance device for use with a maxillary appliance device, as described above (e.g., in FIGS. 5A-5B, 6 and 7). For example, in FIG. 11B the device includes the same features shown in FIG. 11A (e.g., removed buccal and occlusal side regions between the anterior and posterior tooth-receiving regions, and thickening of the lingual side) but may also include a pair of maxillary engagement projections 1173, 1173' on each of the posterior tooth-receiving portions 1199, 1199'. Each of the maxillary engagement projections may include a buccalizing reaction surface 1178, 1178' that is configured to engage (and receive force from) a maxillary supported reaction surface of a mandibular engagement projection on a mandibular appliance device, resulting in a buccal resulting force 1179 that may drive expansion of the mandibular arch.

In any of the example appliances (both mandibular and maxillary appliances) described herein, the appliance may include a single cut-out region, or a pair of cut-out regions (e.g., intermediate regions) on either side of the appliance. Although the figures illustrate examples in which both sides of the appliance include cut-out regions, it should be apparent that only a single side (e.g., corresponding to a region of unerupted or incompletely erupted teeth) of the dentition.

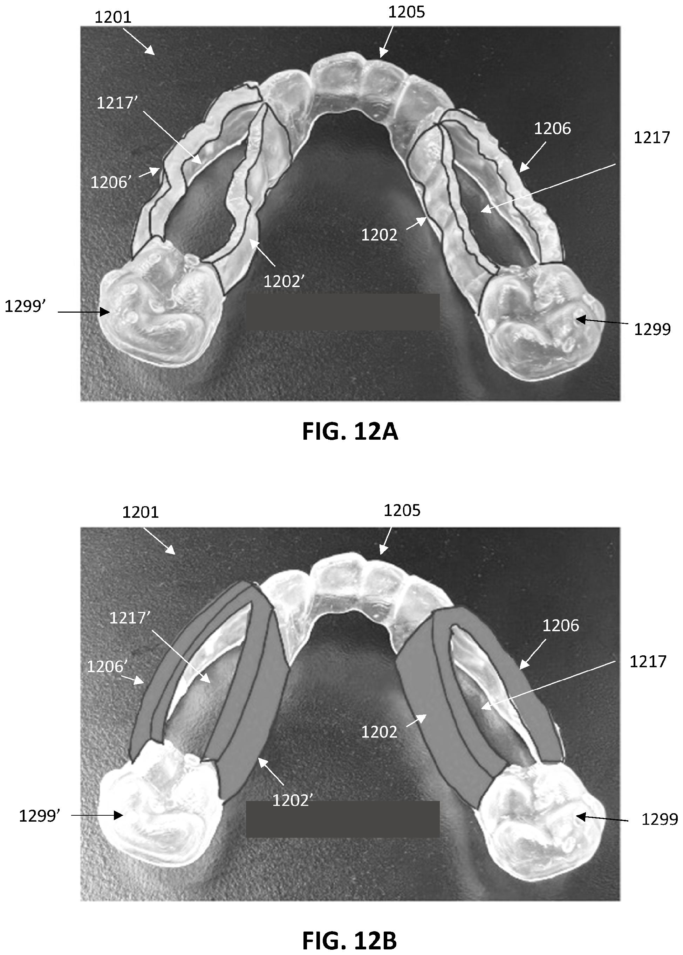

FIGS. 12A-12C illustrate additional examples. In FIG. 12A the mandibular appliance is configured to provide additional space (e.g., room) for the eruption of one or more teeth by changing the shape of the buccal/lingual sides in order to smooth the transition within these regions. This may provide additional room for eruption of teeth, may allow error in the eruption prediction, and may avoid stress concentrations when wearing the appliances. For example, in FIG. 12A the mandibular appliance 1201 includes an anterior tooth-receiving portion 1205 and a pair of posterior tooth-receiving portions 1299, 1299'. In this example a pair of occlusal cut-out regions 1217, 1217' are shown on either sides of the appliance, e.g., in intermediate regions, having buccal sides 1206, 1206' and lingual sides 1202, 1202'. In some examples the appliances may be configured so that the lingual and/or buccal sides of this intermediate region conform closely with the outer shape of the patient's teeth, including any erupted and/or predicted unerupted or partially erupted teeth. Alternatively or additionally, as shown in FIG. 12B, either or both the lingual and/or buccal sides of the intermediate region may be configured to be spaced apart from the patient's teeth, including the unerupted and/or erupted teeth.

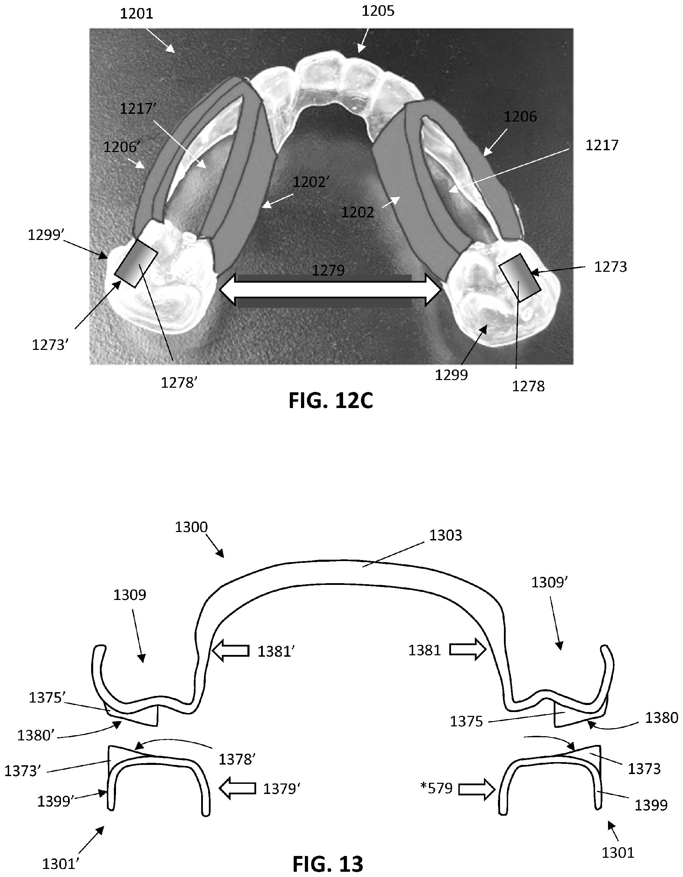

FIG. 12C illustrates an example of a mandibular appliance device similar to that shown in FIG. 12B, e.g., including enhanced region for expansion of the teeth, and including a pair of maxillary engagement projections each including a buccally-facing buccalizing reaction surface 1278, 1278' configured to engage with a reaction surface (e.g., a maxillary supported reaction surface) of a maxillary appliance device, in order to impart a buccal expansion force 1279.

FIG. 13 schematically illustrates this interaction between a mandibular appliance device and a maxillary appliance device in which the stiffness of the maxillary appliance device 1300, which includes a palatal region 1303, may support expansion of the patient's mandibular arch, because of a lateral (and buccal) expansion force applied by the interaction of a pair of mandibular engagement projections 1375, 1375' on the posterior tooth receiving portions 1309, 1309' of the maxillary appliance device with a pair of maxillary engagement projections 1373, 1373' on the mandibular appliance device 1301, 1301'. As described above, the maxillary supported reaction surfaces 1380, 1380' of the mandibular engagement projections 1375, 1375' may apply a buccal resulting force on the buccalizing reaction surfaces 1375, 1378' of the maxillary engagement projections 1373, 1373'. Thus, the maxillary appliance device may provide a maxillary supporting force 1381, 1381' opposing compression of the maxillary appliance and resulting in the expansion force (buccal expansion force 1379, 1379') on the mandibular arch.

It should be appreciated that all combinations of the foregoing concepts and additional concepts discussed in greater detail below (provided such concepts are not mutually inconsistent) are contemplated as being part of the inventive subject matter disclosed herein and may be used to achieve the benefits described herein.

The process parameters and sequence of steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

Any of the methods (including user interfaces) described herein may be implemented as software, hardware or firmware, and may be described as a non-transitory computer-readable storage medium storing a set of instructions capable of being executed by a processor (e.g., computer, tablet, smartphone, etc.), that when executed by the processor causes the processor to control perform any of the steps, including but not limited to: displaying, communicating with the user, analyzing, modifying parameters (including timing, frequency, intensity, etc.), determining, alerting, or the like. For example, any of the methods described herein may be performed, at least in part, by an apparatus including one or more processors having a memory storing a non-transitory computer-readable storage medium storing a set of instructions for the processes(s) of the method.

The processor as described herein can be configured to perform one or more steps of any method disclosed herein. Alternatively or in combination, the processor can be configured to combine one or more steps of one or more methods as disclosed herein.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present. Although described or shown with respect to one embodiment, the features and elements so described or shown can apply to other embodiments. It will also be appreciated by those of skill in the art that references to a structure or feature that is disposed "adjacent" another feature may have portions that overlap or underlie the adjacent feature.

Terminology used herein is for the purpose of describing particular embodiments only and is not intended to be limiting of the invention. For example, as used herein, the singular forms "a", "an" and "the" are intended to include the plural forms as well, unless the context clearly indicates otherwise. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof. As used herein, the term "and/or" includes any and all combinations of one or more of the associated listed items and may be abbreviated as "/".

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings of the present invention.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

In general, any of the apparatuses and methods described herein should be understood to be inclusive, but all or a sub-set of the components and/or steps may alternatively be exclusive and may be expressed as "consisting of" or alternatively "consisting essentially of" the various components, steps, sub-components or sub-steps.

As used herein in the specification and claims, including as used in the examples and unless otherwise expressly specified, all numbers may be read as if prefaced by the word "about" or "approximately," even if the term does not expressly appear. The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/- 5% of the stated value (or range of values), +/- 10% of the stated value (or range of values), etc. Any numerical values given herein should also be understood to include about or approximately that value, unless the context indicates otherwise. For example, if the value "10" is disclosed, then "about 10" is also disclosed. Any numerical range recited herein is intended to include all sub-ranges subsumed therein. It is also understood that when a value is disclosed that "less than or equal to" the value, "greater than or equal to the value" and possible ranges between values are also disclosed, as appropriately understood by the skilled artisan. For example, if the value "X" is disclosed the "less than or equal to X" as well as "greater than or equal to X" (e.g., where X is a numerical value) is also disclosed. It is also understood that the throughout the application, data is provided in a number of different formats, and that this data, represents endpoints and starting points, and ranges for any combination of the data points. For example, if a particular data point "10" and a particular data point "15" are disclosed, it is understood that greater than, greater than or equal to, less than, less than or equal to, and equal to 10 and 15 are considered disclosed as well as between 10 and 15. It is also understood that each unit between two particular units are also disclosed. For example, if 10 and 15 are disclosed, then 11, 12, 13, and 14 are also disclosed.

Although various illustrative embodiments are described above, any of a number of changes may be made to various embodiments without departing from the scope of the invention as described by the claims. For example, the order in which various described method steps are performed may often be changed in alternative embodiments, and in other alternative embodiments one or more method steps may be skipped altogether. Optional features of various device and system embodiments may be included in some embodiments and not in others. Therefore, the foregoing description is provided primarily for exemplary purposes and should not be interpreted to limit the scope of the invention as it is set forth in the claims.

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure. Such embodiments of the inventive subject matter may be referred to herein individually or collectively by the term "invention" merely for convenience and without intending to voluntarily limit the scope of this application to any single invention or inventive concept, if more than one is, in fact, disclosed. Thus, although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.
The following clauses form part of the disclosure of the present application.
1. A mandibular dental appliance device, the device comprising:
   a shell body having a lingual side, an occlusal side, and a buccal side, wherein the shell body comprises an anterior tooth-receiving region, a first posterior tooth-receiving region, and a second posterior tooth-receiving region;
   a first opening through the occlusal side of the shell body between the anterior tooth-receiving region and the first posterior tooth-receiving region, configured to permit eruption of one or more teeth therethrough; and
   a rim extending around the first opening through the occlusal side of the shell body, wherein the rim has a thickness that is greater than a thickness of the first posterior tooth-receiving region.
2. The device of clause 1, wherein the rim comprises a thickened rim having a thickness that is greater than twice as thick as a thickness of the first posterior tooth-receiving region.
3. The device of clause 2, further comprising a second opening through the occlusal side of the shell body between the anterior tooth-receiving region and the second posterior tooth-receiving region, configured to permit eruption of one or more teeth therethrough, and a second thickened rim extending around the second opening through the occlusal side of the shell body, wherein the thickened rim has a thickness that is greater than twice as thick as a thickness of the second posterior tooth-receiving region.
4. The device of clause 1, further comprising a first maxillary engagement projection extending from the occlusal side of the first posterior tooth-receiving region and a second maxillary engagement projection extending from the occlusal side of the second posterior tooth-receiving region, wherein the first and second maxillary engagement projections are configured to apply 1 N or more of expansion force to a patient's teeth between the first posterior tooth-receiving region and the second posterior tooth-receiving region.
5. The device of clause 4, wherein the first maxillary engagement projection extends from a buccal region of the occlusal side of the first posterior tooth-receiving region and the second maxillary engagement projection extends from a buccal region of the occlusal side of the second posterior tooth-receiving region.
6. The device of clause 5, wherein the first maxillary engagement projection and the second maxillary engagement projection do not extend from a lingual region of the occlusal side of the first posterior tooth-receiving region or from a lingual region of the occlusal side of the second posterior tooth-receiving region.
7. The device of clause 4, wherein the first maxillary engagement projection is configured to engage with a connector on a maxillary dental appliance device worn on a patient's maxillary arch.
8. The device of clause 4, wherein the first maxillary engagement projection and the second maxillary engagement projection each comprises a block of material.
9. The device of clause 4, wherein the first maxillary engagement projection and the second maxillary engagement projection each comprises a lingually-facing ramp surface.
10. The device of clause 1, wherein the mandibular dental appliance device is configured to apply 1 N or more of expansion force to a patient's teeth between the first posterior tooth-receiving region and the second posterior tooth-receiving region.
11. The device of clause 1, wherein a width of the lingual side of the shell body laterally adjacent to the first opening through the occlusal side of the shell body extends at least 75% of a width the lingual side of the shell body lateral to the first posterior tooth-receiving region.
12. The device of clause 1, wherein the lingual side of the shell body laterally adjacent to the first opening through the occlusal side of the shell body extends from a gingival line to within about 1 mm of the occlusal side of the shell body.
13. The device of clause 1 wherein the first opening through the occlusal side is configured to permit eruption of two or more teeth therethrough.
14. The device of clause 1, wherein the shell body comprises nylon material.
15. The device of clause 1, wherein the first and second thickened rims each have a thickness that is 2 mm or greater and the first posterior tooth-receiving region or the second posterior tooth-receiving region has a thickness of 0.9 mm or less.
16. The device of clause 1, further comprising an attachment coupling region configured to engage an attachment mounted to a patient's teeth.
17. The device of clause 1, further comprising an attachment coupling region forming a cavity on a lingual side of the first posterior tooth-receiving region.
18. The device of clause 1, wherein the lingual and buccal sides of the shell body adjacent to the first opening through the occlusal side of the shell body and the lingual and buccal sides of the shell body adjacent to the second opening through the occlusal side of the shell body are configured to be offset from an outer surface of a patient's teeth when the device is worn by the patient.
19. An orthodontic system comprising:
   a maxillary dental appliance device having a first shell body comprising an anterior tooth-receiving region and a pair of posterior tooth-receiving regions that are separated by a palatal region; and
   a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the second shell body between the anterior tooth-receiving region and each of the posterior tooth-receiving regions forms an opening to allow eruption of teeth therethrough, and a pair of maxillary engagement projections extending from the occlusal sides of the posterior tooth-receiving regions,
   wherein the pair of maxillary engagement projections are configured to engage with the maxillary dental appliance device to apply an expansion force to a patient's teeth between the posterior tooth-receiving regions of the mandibular dental appliance device.
20. The system of clause 19, wherein the expansion for is 1 N or more.
21. The system of clause 19, wherein the palatal region is greater than twice as thick as a thickness of the anterior tooth-receiving region or either of the posterior tooth-receiving regions.
22. The system of clause 19, wherein the mandibular dental appliance device comprises a thickened rim around the opening through the occlusal side of the first shell body, wherein the thickened rim has a thickness that is more than twice a thickness of the posterior tooth-receiving regions.
23. The system of clause 19, wherein the maxillary engagement projections each extend from a buccal region of the occlusal side of the posterior tooth-receiving regions.
24. The system of clause 19, wherein the maxillary engagement projections do not extend from a lingual region of the occlusal side of the posterior tooth-receiving regions.
25. The system of clause 19, further comprising a pair of connectors on the maxillary dental appliance device configured to engage with the maxillary engagement projections.
26. The system of clause 19, wherein the maxillary engagement projections each comprise a block of material.
27. The system of clause 19, wherein the maxillary engagement projections each comprise a lingually-facing ramp surface.
28. A method comprising:
   generating, from a digital model of a patient's teeth, a model of a maxillary dental appliance device having a first shell body comprising an anterior tooth-receiving region and a pair of posterior tooth-receiving regions that are separated by a palatal region;
   generating, from the digital model of the patient's teeth, a model of a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the first shell body between the anterior tooth-receiving region and each of the posterior tooth-receiving regions forms an opening to allow eruption of the patient's teeth therethrough, and a pair of mandibular engagement projections extending from the occlusal sides of the posterior tooth-receiving regions;
   further wherein the pair of mandibular engagement projections are configured to engage with the mandibular dental appliance device to an expansion force to the patient's teeth between the posterior tooth-receiving regions.
29. The method of clause 28, wherein the pair of mandibular engagement projections are configured to engage with the mandibular dental appliance device to an expansion force of 1 N or greater.
30. The method of clause 28, further comprising fabricating the mandibular dental appliance device from the digital model of the mandibular dental appliance device and fabricating the maxillary dental appliance device from the digital model of the maxillary dental appliance device.
31. The method of clause 28, wherein fabricating comprises fabricating by a direct fabrication technique.
32. The method of clause 28, wherein the palatal region is greater than twice as thick as a thickness of the anterior tooth-receiving portion or either of the posterior tooth-receiving regions.
33. The method of clause 28, further comprising receiving the digital model of the patient's teeth.
34. The method of clause 28, wherein generating the model of the mandibular dental appliance device and the maxillary dental appliance device comprises generating a digital model of the mandibular dental appliance device and the maxillary dental appliance device.
35. The method of clause 28, wherein generating the model of the mandibular dental appliance device and the maxillary dental appliance device comprises configuring the mandibular dental appliance device and the maxillary dental appliance device so that the patient's teeth are retained in a predetermined position following an orthodontic treatment.
36. The method of clause 28, wherein generating the model of a mandibular dental appliance device comprises setting a thickness of a thickened rim around each of the openings through the occlusal side of the first shell body to a thickness that is more than twice a thickness of the posterior tooth-receiving regions.
37. A non-transitory computer-readable medium including contents that are configured to cause one or more processors to perform a method comprising:
   generating, from a digital model of patient's teeth, a model of a maxillary dental appliance device having a first shell body comprising an anterior tooth-receiving region and a pair of posterior tooth-receiving regions that are separated by a palatal region;
   generating, from the digital model of the patient's teeth, a model of a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the second shell body between the anterior tooth-receiving region and each of the posterior tooth-receiving regions forms an opening to allow eruption of teeth therethrough, and a pair of mandibular engagement projections extending from the occlusal sides of the posterior tooth-receiving regions;
   further wherein the pair of mandibular engagement projections are configured to engage with the mandibular dental appliance device to an expansion force to the patient's teeth between the posterior tooth-receiving regions.
38. A method for forming a set of dental appliances, the method comprising:
   forming of a maxillary dental appliance device having a first shell body comprising an anterior tooth-receiving region and a pair of posterior tooth-receiving regions that are separated by a palatal region;
   forming a mandibular dental appliance device having a second shell body comprising a lingual side, an occlusal side and a lateral side, wherein the second shell body further comprises an anterior tooth-receiving region and a pair of posterior tooth-receiving regions, wherein a portion of the occlusal side of the second shell body between the anterior tooth-receiving region and each of the posterior tooth-receiving regions forms an opening to allow eruption of teeth therethrough, and a pair of mandibular engagement projections extending from the occlusal sides of the posterior tooth-receiving regions;
   further wherein the pair of mandibular engagement projections are configured to engage with the mandibular dental appliance device to an expansion force to a patient's teeth between the posterior tooth-receiving regions.
39. The method of clause 38, wherein forming the mandibular dental appliance device and the maxillary dental appliance device comprises forming by direct fabrication.
40. A mandibular expansion appliance device, the device comprising:
   a shell body having a lingual side, an occlusal side, and a buccal side, wherein the shell body comprises an anterior tooth-receiving region, a first posterior tooth-receiving region, a second posterior tooth-receiving region, and a first intermediate region between the anterior region and the first posterior tooth-receiving region;
   wherein the first intermediate region is missing the occlusal and buccal sides of the shell body but include the lingual sides,
   further wherein the lingual side of the first intermediate region is thicker than the lingual side of the anterior tooth-receiving region.
41. The device of clause 40, further comprising a second intermediate region between the anterior region and the second posterior tooth-receiving region, wherein the second intermediate region is missing the occlusal and buccal sides of the shell body but include the lingual side, further wherein the lingual side of the second intermediate region is thicker than the lingual side of the anterior tooth-receiving region.
42. The device of clause 40, wherein the shell body comprises a monolithic structure.
43. The device of clause 40, wherein the lingual sides of the first and second intermediate regions are configured to conform to a patient's teeth.
44. The device of clause 40, wherein the lingual sides of the first and second intermediate regions are configured to be offset from an outer surface of a patient's teeth when worn.
45. The device of clause 40, wherein the lingual sides of the first and second intermediate regions have a thickness that is between about 1.2 and 4 times the thickness of the lingual side of the anterior tooth-receiving region.
46. The device of clause 40, further comprising a first maxillary engagement projection extending from the occlusal side of the first posterior tooth-receiving region and a second maxillary engagement projection extending from the occlusal side of the second posterior tooth-receiving region.
47. The device of clause 46, wherein the first and second maxillary engagement projections are configured to apply 1 N or more of expansion force to a patient's teeth between the first posterior tooth-receiving region and the second posterior tooth-receiving region.
48. The device of clause 46, wherein the first maxillary engagement projection extends from a buccal region of the occlusal side of the first posterior tooth-receiving region and the second maxillary engagement projection extends from a buccal region of the occlusal side of the second posterior tooth-receiving region.
49. The device of clause 48, wherein the first maxillary engagement projection and the second maxillary engagement projection do not extend from a lingual region of the occlusal side of the first posterior tooth-receiving region or from a lingual region of the occlusal side of the second posterior tooth-receiving region.
50. The device of clause 46, wherein the first maxillary engagement projection and the second maxillary engagement projection each comprise a buccalizing reaction surface that is configured to engage with a connector on a maxillary dental appliance device worn on a patient's maxillary arch to apply an expansion force between the first and second posterior tooth-receiving portions.
51. The device of clause 46, wherein the first maxillary engagement projection and the second maxillary engagement projection each comprises a lingually-facing ramp surface.
52. The device of clause 40, wherein the mandibular dental appliance device is configured to apply 1 N or more of expansion force to a patient's teeth between the first posterior tooth-receiving region and the second posterior tooth-receiving region.
53. The device of clause 40, wherein the shell body comprises nylon material.
54. The device of clause 40, wherein the lingual sides of the first intermediate regions have a thickness that is 2 mm or greater and the buccal sides of the first posterior tooth-receiving region or the second posterior tooth-receiving region has a thickness of 0.9 mm or less.
55. The device of clause 40, further comprising an attachment coupling region configured to engage an attachment mounted to a patient's teeth.
56. A system for expanding a patient's mandibular arch, the system comprising:
   a maxillary dental appliance device comprising: a first tooth receiving region, a second tooth receiving region and a palatal region extending therebetween, wherein each of the first and second tooth receiving regions comprises a mandibular engagement projection comprising a maxillary reaction surface extending from an occlusal surface; and
   a mandibular dental appliance device comprising: an anterior tooth-receiving region, a first posterior tooth-receiving region, a second posterior tooth-receiving region, wherein each of the first and second posterior tooth receiving regions comprises a maxillary engagement projection comprising a buccalizing reaction surface,
   wherein the maxillary reaction surface is configured to engage with the buccalizing reaction surface when the maxillary dental appliance device and the mandibular dental appliance device are worn, and to apply a resulting force between the first posterior tooth-receiving region and the second posterior tooth-receiving region to expand the mandibular arch.
57. The system of clause 56, wherein the resulting force is 1 N or greater.
58. The system of clause 56, wherein the buccalizing reaction surface faces a buccal direction.
59. The system of clause 56, wherein the buccalizing reaction surface has an angle relative to a plane through the anterior tooth-receiving region, the first posterior tooth-receiving region, and the second posterior tooth-receiving region of the mandibular dental appliance device that is greater than 10 degrees.
60. The system of clause 56, wherein either or both the first posterior tooth-receiving region and the second posterior tooth-receiving region comprises an opening through an occlusal side of the mandibular dental appliance device between the anterior tooth-receiving region and the first posterior tooth-receiving region, configured to permit eruption of one or more teeth therethrough.
61. The system of clause 60, wherein the mandibular dental appliance device is missing the buccal side of the mandibular dental appliance device adjacent to the opening through the occlusal side, further wherein the lingual side of the mandibular dental appliance device adjacent to the opening through the occlusal side is thicker than the lingual side of the anterior tooth-receiving region.
62. The system of clause 60, wherein the mandibular dental appliance device is one of a plurality of mandibular dental appliance devices in a sequence of mandibular dental appliance devices configured to be worn as part of a treatment plan to expand the patient's mandibular arch, wherein a separation between the maxillary engagement projections of the mandibular dental appliance devices in the plurality of mandibular dental appliance devices increases across the sequence of mandibular dental appliance devices.

## Claims

1. A mandibular expansion appliance device, the device comprising:
a shell body (1101) having a lingual side, an occlusal side, and a buccal side, wherein the shell body comprises an anterior tooth-receiving region (1105), a first posterior tooth receiving region (1199), a second posterior tooth-receiving region (1199'), and a first intermediate region (1117) between the anterior region and the first posterior tooth receiving region;
wherein the first intermediate region is missing the occlusal and buccal sides of the shell body but includes the lingual side, further wherein the lingual side of the first intermediate region is thicker (1166) than the lingual side of the anterior tooth-receiving region.

2. The device of claim 1, further comprising a second intermediate region (1117') between the anterior region and the second posterior tooth-receiving region, wherein the second intermediate region is missing the occlusal and buccal sides of the shell body but include the lingual side, further wherein the lingual side of the second intermediate region is thicker than the lingual side of the anterior tooth-receiving region.

3. The device of claim 1, wherein the shell body comprises a monolithic structure.

4. The device of claim 1, wherein the lingual sides of the first and second intermediate regions are configured to conform to a patient's teeth.

5. The device of claim 1, wherein the lingual sides of the first and second intermediate regions are configured to be offset from an outer surface of a patient's teeth when worn.

6. The device of claim 1, wherein the lingual sides of the first and second intermediate regions have a thickness that is between about 1.2 and 4 times the thickness of the lingual side of the anterior tooth-receiving region.

7. The device of claim 1, further comprising a first maxillary engagement projection extending from the occlusal side of the first posterior tooth-receiving region and a second maxillary engagement projection extending from the occlusal side of the second posterior tooth-receiving region.

8. The device of claim 7, wherein the first and second maxillary engagement projections are configured to apply 1 N or more of expansion force to a patient's teeth between the first posterior tooth-receiving region and the second posterior tooth-receiving region.

9. The device of claim 7, wherein the first maxillary engagement projection extends from a buccal region of the occlusal side of the first posterior tooth-receiving region and the second maxillary engagement projection extends from a buccal region of the occlusal side of the second posterior tooth-receiving region.

10. The device of claim 9, wherein the first maxillary engagement projection and the second maxillary engagement projection do not extend from a lingual region of the occlusal side of the first posterior tooth-receiving region or from a lingual region of the occlusal side of the second posterior tooth-receiving region.

11. The device of claim 7, wherein the first maxillary engagement projection and the second maxillary engagement projection each comprise a buccalizing reaction surface that is configured to engage with a connector on a maxillary dental appliance device worn on a patient's maxillary arch to apply an expansion force between the first and second posterior tooth-receiving portions.

12. The device of claim 7, wherein the first maxillary engagement projection and the second maxillary engagement projection each comprises a lingually-facing ramp surface.

13. The device of claim 1, wherein the mandibular dental appliance device is configured to apply 1 N or more of expansion force to a patient's teeth between the first posterior toothreceiving region and the second posterior tooth-receiving region.

14. The device of claim 1, wherein the lingual sides of the first intermediate regions have a thickness that is 2 mm or greater and the buccal sides of the first posterior tooth-receiving region or the second posterior tooth-receiving region has a thickness of 0.9 mm or less.

15. The device of claim 1, further comprising an attachment coupling region configured to engage an attachment mounted to a patient's teeth.
